# EUROPEAN PATENT APPLICATION

(11) **EP 2 601 830 A1**
(43) Date of publication of application: **12.06.2013**
(21) Application number: 12195609.8
(22) Date of filing: 05.12.2012
(51) Int. Cl.: A01G 13/10

(54) **Device for protection of top shoot (leading shoot) of trees of the Abies- and Picea-families**

(30) Priority: 09.12.2011 DK 201170691
(71) Applicant: Paludan Lindgaard, Lotte, 8653 Them (DK); Dalsgaard Jensen, Verner, 8653 Them (DK)
(72) Inventor: Paludan Lindgaard, Lotte, 8653 Them (DK); Dalsgaard Jensen, Verner, 8653 Them (DK)
(74) Representative: Gregersen, Niels Henrik

(57) **Abstract**

A device for protecting top shoots (lead shoots) (2) on conifers (3) of the Abies or Picea families, the device including a fastening section (8) adapted for fixing a protective member (6) extending along the top shoot (2), wherein the fastening section is constituted by an elongated stake (8) adapted either to be fixed in the soil (10) along a stem of a conifer (4) of which the top shoot is to be protected or to be fixed to the stem, and where the protective member is constituted by an elongated tubular mesh (6) which is adapted to be mounted on the fastening section (8) such that the tubular mesh (6) surrounds the top shoot (2). In a very simple way it hereby becomes possible to impart the device almost universal character such that by one and the same device it is possible to achieve protection of top shoots of conifers against biting by hares and roe deer and at the same time protect the top shoots against birds. In addition, fencing in of new plants can be avoided.

## Description

### Field of the Invention

The present invention concerns a device for protecting top shoots (leading shoots) on trees of the Picea and Abies families and of the kind indicated in the preamble of claim 1.

### Background of the Invention

DK 169052 B1 describes a device for protecting top shoots of conifers, the device comprising an upper part adapted to be placed over the top shoot of a conifer, and a lower part with fastening means adapted to be fastened to the stem under an upper branch circle or rudiment of such. The device consists of plastic and includes a stem part between upper and lower parts adapted to run mainly in parallel with and along the top shoot.

DK 172287 B1 describes a top shoot protector consisting of a protecting stick running in parallel with and along a stem, the top shoot of which to be protected against biting or breaking, which is effected by the upper end of the protective stick extending upwards beyond the top shoot. The protective stick is fastened by means of clips each having a first and a second U-shaped profile which is intended for resilient engagement around the protective stick and the stem, respectively.

DK 98 00108 U3 describes a device for branch righting, particularly for establishing top shoots on conifers such as Christmas trees. In connection with production of Christmas trees it is a great nuisance and economic loss if some of the trees in a planting lose their top shoots. In order to solve this problem there is provided a device for branch righting, in particular for re-establishing a top shoot on a conifer, such as a Christmas tree, including a bracket of galvanised wire material, wherein the bracket has a propping up part connected to a saddle part which is furthermore connected to a fixing device.

FR 2 680 076 Al discloses a method for preparing a protective structure, particularly for plants, made up of a perforated sleeve (sheath) made more specially of cylindrical netting closed up on itself and surrounding the foot to be protected. The method is characterised in that a perforated tubular structure is continuously extruded in a known fashion providing, along one generatrix of the said tube at least one solid strip, and in that the tube is slit longitudinal along a generatrix of the tube close to or on the said strip so as to have available a slit tube including, on at least one edge, a margin formed of a solid section resulting from the said strip, and in that the continuously into individual lengths, each length thus constituting an open sheath which can be closed back up on itself when it is installed on the site. The invention relates to the protective sleeve thus obtained.

FR 2 618 294 Al discloses a device for protecting plantations with respect to rodent, comprising a tubular sheath made from plastic with a net-like structure. The said sheath has a structure with fine square links (meshes) formed of longitudinal filaments and transverse filaments intercrossed at substantially right angles and includes at least two longitudinal strips each one bounded by two longitudinal filaments the said strip having a structure formed of square or rectangular links (meshes) whose dimension is distinctly greater that that of the links (meshes) of the rest of the tubular sheath.

FR 2 483 179 A1 discloses a perimeter protection to completely surround the parcel to be protected by a fence whose base is partially buried. In addition to installation problems that this leads, its main drawback is a lack of efficiency. Indeed, it is possible, at the time of installation, to enclose within the fences perimeter pests, which is to be avoiding damage, and also the slightest defect in the fence allows the penetration of such animals. Animals covered by the protective corselet of the present invention are especially rodents such as rabbits, but also larger animals such as deer.

US 3 816 959 A discloses a one-piece extruder plastic guard for protecting young trees, plants, flowers, and the like includes a length of tubular mesh formed by intersecting thermoplastic filaments, the tubular mesh being bonded to an elongate thermoplastic extrudate defining a stake or anchoring the tubular mesh in the ground. The tubular mesh surrounds the plants to be protected while the stake portion of the one-piece structure holds the tubular mesh in desired position.

### Object of the Invention

On that background it is the object of the invention to indicate a new and improved device of the kind mentioned in the introduction, and by which it is possible to impart the device almost universal character such that by one and the same device it is possible to achieve protection of top shoots of conifers against biting by hares and roe deer and at the same time protect the top shoots against birds.

### Description of the Invention

The device according to the invention is peculiar in that the fastening section is constituted by an elongated stake adapted either to be fixed in the soil along a stem of a conifer of which the top shoot is to be protected or to be fixed to the stem, and that the protective member is constituted by an elongated tubular mesh which is adapted to be mounted on the fastening section such that the tubular mesh surrounds the top shoot.

In a very simple way it hereby becomes possible to impart the device almost universal character such that by one and the same device it is possible to achieve protection of top shoots of conifers against biting by hares and roe deer and at the same time protect the top shoots against birds.

Another very important advantage of using a top shoot protector according to the invention is that it becomes possible to avoid the very tedious fencing in of plantings with new Christmas trees. The fact that fencing in of new Christmas tree plantings can entirely be dispensed with also means a significant reduction in production and maintenance costs.

By means of the device according to the invention it is furthermore possible to reestablish top shoots on conifers in a way known per se by using the tubular top shoot protector in order to force a side shoot upwards for substituting a not naturally formed top shoot or a top shoot which has been destroyed in other ways.

The device according to the invention is designed such that the elongated stake is preferably constituted by a natural material, such as a stake of bamboo.

The device according to the invention is suitably designed such that the protective member is constituted by a prefabricated tubular mesh extruded of a suitable plastic material which e.g. can have a green colour adapted to the conditions.

Alternatively, the device according to the invention can be designed such that the protective member is constituted by a plate-shaped piece of netting adapted to be rolled up into forming a tubular mesh and to be connected with the elongated fastening section.

With the object of establishing easy fixation or connection, respectively, it may be particularly expedient to design the device according to the invention such that the tubular mesh and the plate-shaped piece of netting are designed with openings through which the elongated stake can run in order to fix the tubular mesh or the plate-shaped piece of netting in rolled up form, respectively, to the elongated stake.

The device according to the invention can additionally be designed with particular advantage such that the elongated stake is disposed internally of the tubular mesh or the rolled up, tubular netting, and that the elongated stake can be displaced in longitudinal direction relative to the tubular mesh.

### Description of the Drawing

The invention is explained more closely in the following with reference to the drawing, on which:
- Fig. 1: shows a plan view, partly in section, of a device according to the invention mounted on a stake fixed in the ground and which surrounds the top shoot of a newly planted conifer;
- Fig. 2: shows a perspective view of an embodiment of a device according to the invention, mounted on bamboo stake;
- Fig. 3: shows an enlarged perspective view of an embodiment of an embodiment, cf. Fig. 2, of a device according to the invention mounted on a bamboo stake;
- Fig. 4: shows a perspective view of an embodiment of a device according to the invention, in the form of a tubular mesh;
- Fig. 5: shows a perspective view of an embodiment of a device according to the invention, in which it is clearly seen how the tubular mesh is fixed on a bamboo stake running longitudinally internally of the device;
- Fig. 6: shows a perspective view of an embodiment of a device according to the invention, in which it is clearly seen how the tubular mesh is fixed on a bamboo stake running longitudinally internally of the device and both above and below the latter;
- Fig. 7: shows a perspective view of an embodiment of a device according to the invention in the form of a tubular mesh which at one side is formed with four horizontal cuts such that a bamboo stake can be fixed to an internal side as it runs alternatingly inside and outside through the horizontal cuts;
- Fig. 8: shows a view of a Nordmann fir mounted with a top shoot protector according to the invention immediately after planting;
- Fig. 9: shows a view of a Nordmann fir mounted with a top shoot protector according to the invention the second year after planting;
- Fig. 10: shows a view of a Nordmann fir mounted with a top shoot protector according to the invention - the top shoot protector used with or without Tonkin stake;

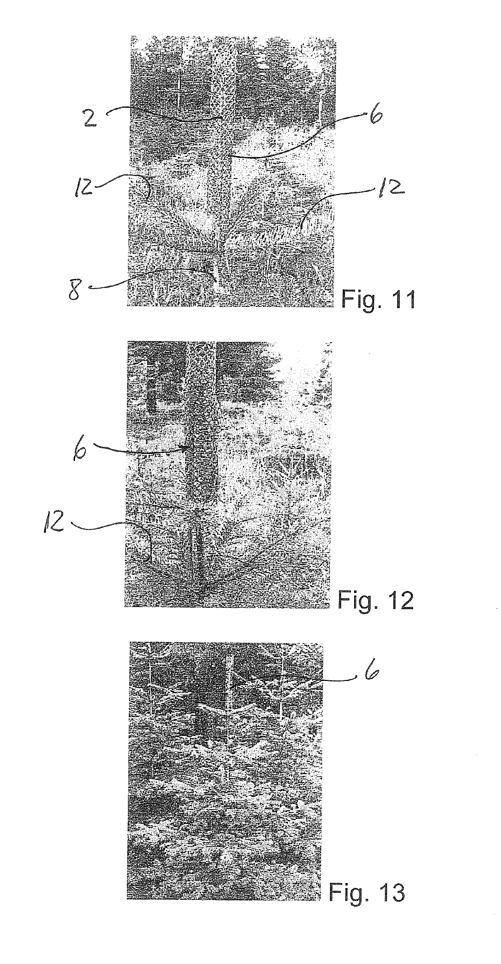

- Fig. 11: shows a view of a Nordmann fir mounted with a top shoot protector according to the invention without using Tonkin stake;
- Fig. 12: shows a view of a Nordmann fir which has not developed a top shoot and where a side shoot is forced upwards by means of a device according to the invention for forming a new top shoot; and
- Fig. 13: shows a view of a Nordmann fir ready for sale mounted with a top shoot protector according to the invention such that the top shoot is protected against bird damage.

### Detailed Description of Embodiments of the Invention

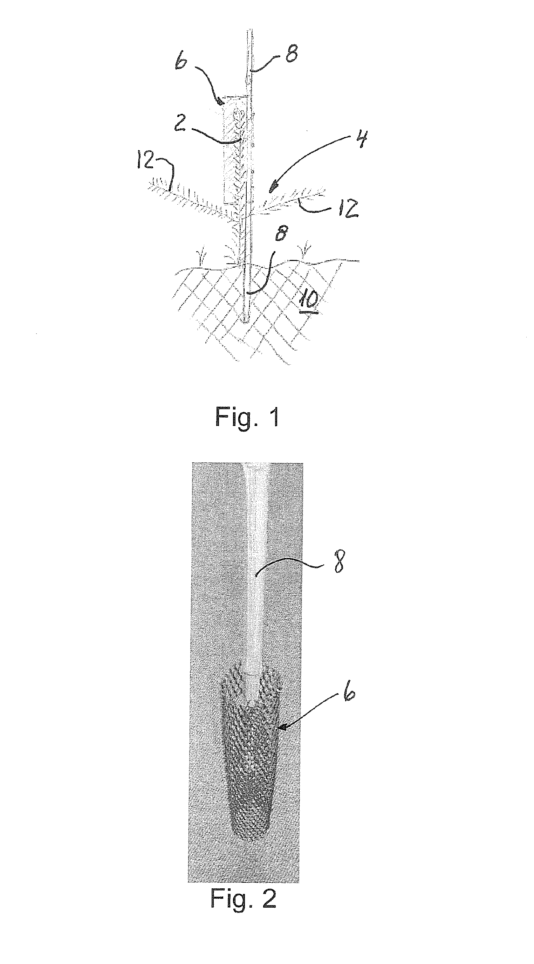

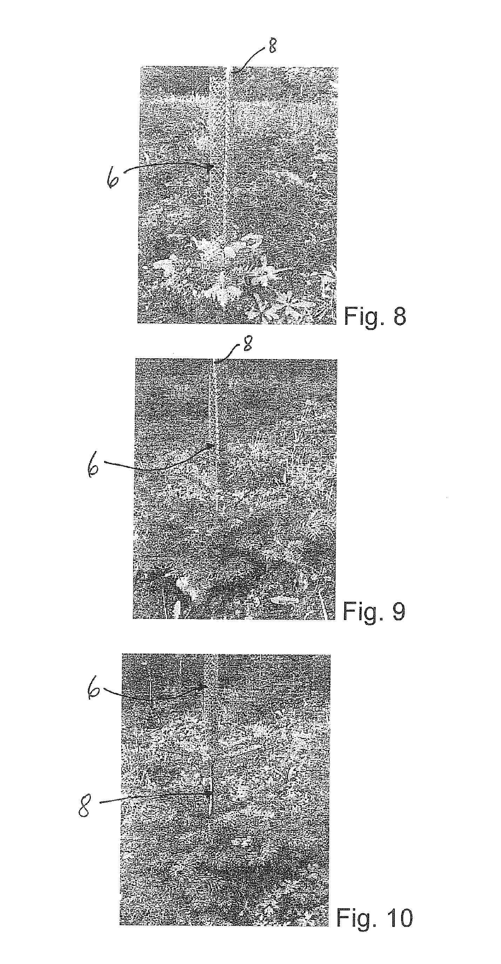

In Fig. 1 is illustrated how a top shoot 2 of a newly planted Nordmann fir 4 is surrounded by a device 6 in the form of a tubular mesh of plastic which is fixed to a Tonkin stake 8 (bamboo stake) which in turn is fixed in the ground 10. The side shoots are designated 12. Moreover, reference is made to Fig. 8.

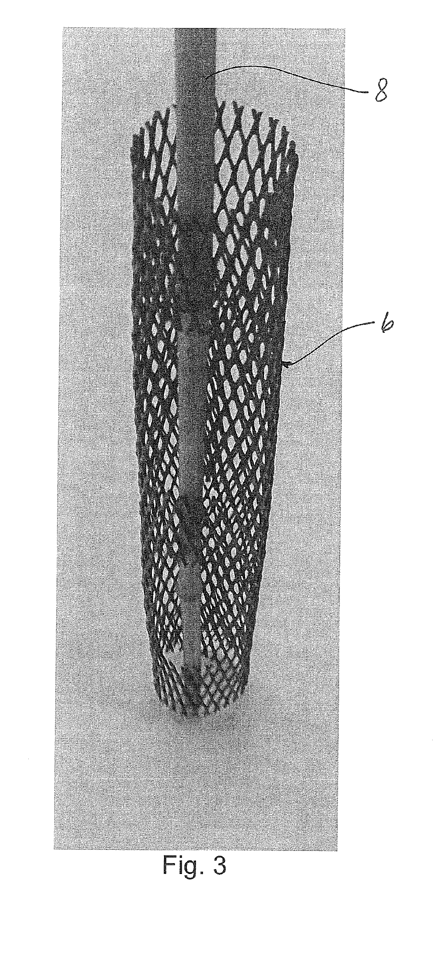

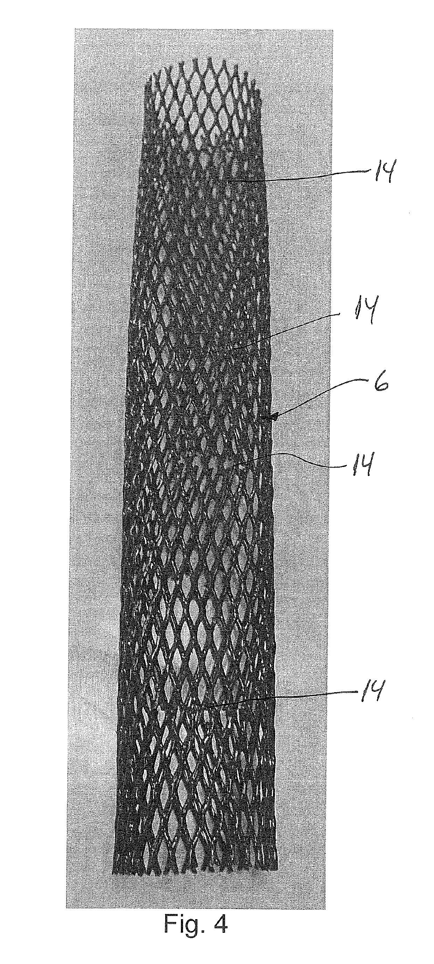

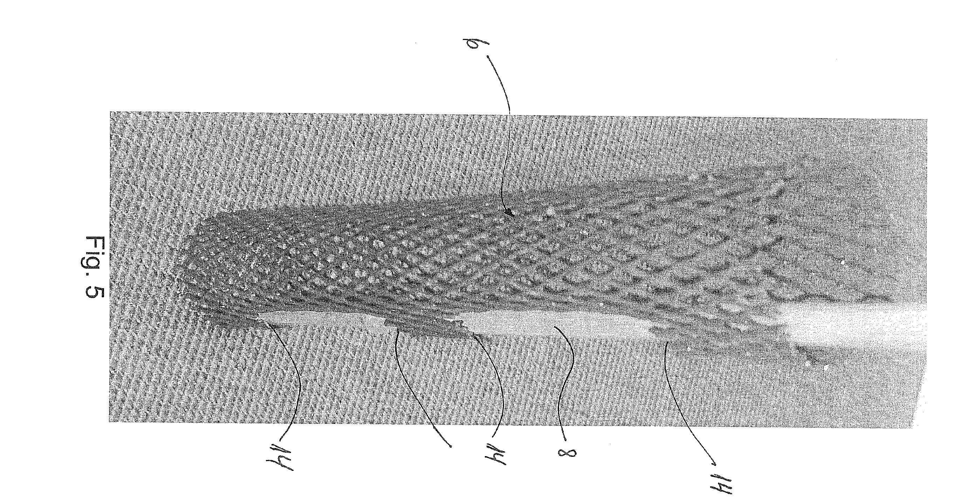

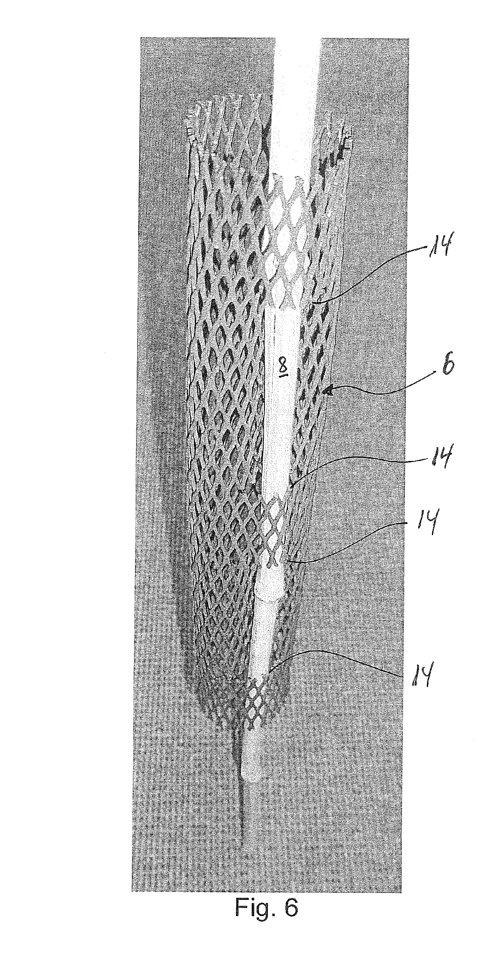

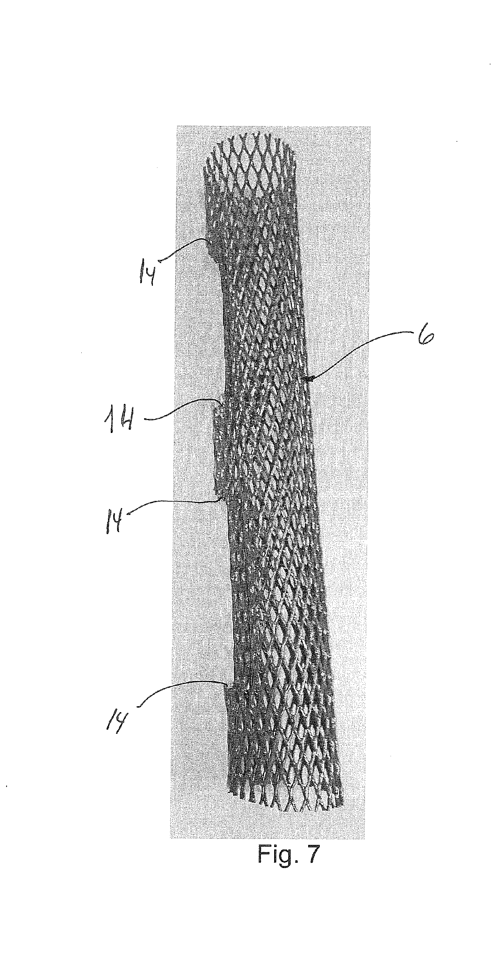

Figs. 2, 3, 5 and 6 show how the tubular device 6 is vertically displaceably fixed on Tonkin stakes 8 in that the stake 8 alternatingly runs internally and externally through four horizontal cuts 14 which are shown more clearly in Fig. 7. Fig. 4 shows the tubular device 6 only. Alternatively, the Tonkin stake 8 may run longitudinally internally at one side of the tubular device 6 which in other ways, e.g. by means of common plastic strips, is fixed to the Tonkin stake 8.

In that connection it is important to point out the importance of the tubular device 6 being mounted vertically displaceable on the Tonkin stake 8 such that- as the tree grows - it is relatively easy to displace the tubular device 6 upwardly on the Tonkin stake 8.

Furthermore, it is essential to point out that the upward displacing of the top shoot protector 6 according to the invention is to be timed rather accurately such that the top shoot protector 6 is displaced upwardly before the top shoot 2 of the conifer 4 begins to form new side shoots 12 as the top shoot protector 6 otherwise will be infiltrated with the new side shoots 12.

Usually Tonkin stakes 8 with a length between 600 and 1000 mm are used, implying that the Tonkin stakes 8 at some time become too short to continue to be fixed in the ground. When this happens, the Tonkin stake 8 is fixed instead along the stem of the conifer, and the top shoot protector 6 is fixed in the usual way to the upper end of the Tonkin stake 8. In other words, the top shoot protector 6 according to the invention can be used during the entire period of growth of a given conifer, e.g. a Christmas tree. In a preferred embodiment, the device according to the invention consists of a tubular mesh of plastic with a length of about 280 mm and a diameter of 40 mm. The length of the associated Tonkin stake can vary between 600 and 1000 mm.

Tonkin stakes are woody shoots or branches of the bamboo species Phyllostachys bambusoides coming from South East Asia, China and Japan.

Finally, it is to be mentioned that the device according to the invention can be used for protecting top shoots on most of the common Christmas trees - common spruce (Picea Abies), Nordmann fir (Abies Nordmaniana), nobilis (Abies Procera), common silver fir (Abies alba) and all other Abies and Picea species, but in addition a device according to the invention could be modified for use for protecting top shoots on other tree species with needles, e.g. larch, and of course all foliferous tree species, e.g. beech, ash and oak.

## Claims

1. A device for protecting top shoots (lead shoots) (2) on conifers (3) of the Abies or Picea families, the device including a fastening section (8) adapted for fixing a protective member (6) extending along the top shoot (2), **characterised in that** the fastening section is constituted by an elongated stake (8) adapted either to be fixed in the soil (10) along a stem of a conifer (4) of which the top shoot is to be protected or to be fixed to the stem, and that the protective member is constituted by an elongated tubular mesh (6) which is adapted to be mounted on the fastening section (8) such that the tubular mesh (6) surrounds the top shoot (2).

2. Device according to claim 1, **characterised in that** the elongated stake is preferably constituted by a natural material, such as a stake (8) of bamboo.

3. Device according to claim 1, **characterised in that** the protective member is constituted by a prefabricated tubular mesh (6) extruded of a suitable plastic material.

4. Device according to claim 1, **characterised in that** the protective member is constituted by a plate-shaped piece of netting adapted to be rolled up into forming a tubular mesh and to be connected with the elongated fastening section.

5. Device according to claim 2 - 4, **characterised in that** the tubular mesh (6) and the plate-shaped piece of netting are designed with side openings or cutouts (14) through which the elongated stake (8) can run in order to fix the tubular mesh (6) or the plate-shaped piece of netting in rolled up form, respectively, to the elongated stake (8).

6. Device according to any preceding claim, **characterised in that** the elongated stake (8) is disposed internally of the tubular mesh (6) or the rolled up, tubular netting, and that the elongated stake (8) can be displaced in longitudinal direction relative to the tubular mesh (6).
